# EUROPÄISCHE PATENTSCHRIFT

(11) **EP 2 601 553 B1**
(45) Veröffentlichungstag und Bekanntmachung des Hinweises auf die Patenterteilung: **30.12.2015**
(21) Anmeldenummer: 11748305.7
(22) Anmeldetag: 21.07.2011
(51) Int. Cl.: G02B 27/01, G02B 3/08, G02B 27/00

(54) **ANZEIGEVORRICHTUNG MIT EINER AUF DEN KOPF EINES BENUTZERS AUFSETZBAREN HALTEVORRICHTUNG**
DISPLAY DEVICE HAVING A HOLDING DEVICE THAT CAN BE PLACED ON THE HEAD OF A USER
DISPOSITIF D'AFFICHAGE PRÉSENTANT UN DISPOSITIF DE RETENUE POUVANT ÊTRE PLACÉ SUR LA TÊTE D'UN UTILISATEUR

(30) Priorität: 17.09.2010 DE 102010040962
(43) Veröffentlichungstag der Anmeldung: 12.06.2013
(73) Patentinhaber: Carl Zeiss AG, 73447 Oberkochen (DE)
(72) Erfinder: DOBSCHAL, Hans-Jürgen, 99510 Kleinromstedt (DE); LINDIG, Karsten, 99084 Erfurt (DE); RUDOLPH, Günter, 07743 Jena (DE)
(74) Vertreter: Geyer, Fehners & Partner
(86) Internationale Anmeldenummer: PCT/EP2011/062528
(87) Internationale Veröffentlichungsnummer: WO 2012/034750

(56) Entgegenhaltungen:
- EP-A1- 0 521 624
- WO-A1-2010/097439
- WO-A1-2010/097442
- US-A1- 2010 164 860

## Beschreibung

Die vorliegende Erfindung betrifft eine Anzeigevorrichtung mit einer auf den Kopf eines Benutzers aufsetzbaren Haltevorrichtung gemäß des Oberbegriffes des Anspruches 1.

Bei solchen Anzeigevorrichtungen, wie z.B in der WO 2010/097442 A1 beschrieben sind, besteht grundsätzlich die Schwierigkeit, den normalen Strahlengang aus der Umgebung mit dem Strahlengang des Lichtes des vom Bilderzeugungsmodul erzeugten Bildes zu überlagern und dem Auge des Benutzers zuzuführen, der die Anzeigevorrichtung auf dem Kopf trägt. Hierbei stellt der Strahlengang des Lichtes des erzeugten Bildes für sich allein gesehen ein Okular dar, welches die Bildinformation des Bilderzeugungsmoduls ins Auge abbildet. Wenn man nun das Okular so ausbildet, daß ein möglichst großes Bildfeld bei gleichzeitig großer Austrittspupille vorliegt, bedingt dies die Verwendung von Ablenkelementen in Form von Spiegeln oder Prismen. Diese zusätzlichen Ablenkelemente erhöhen die Masse und das Volumen der gesamten Anzeigevorrichtung, was beispielsweise den Tragekomfort signifikant einschränkt.

Die Krümmung der Vorder- und Rückseite des Brillenglases führt zu der weiteren Schwierigkeit, daß starke Bildfehler bei der Führung im Lichtkanal auftreten, die kompensiert werden müssen.

Ausgehend hiervon ist es Aufgabe der Erfindung, eine Anzeigevorrichtung der eingangs genannten Art so weiterzubilden, daß das erzeugte Bild mit möglichst wenig Abbildungsfehlern dem Benutzer dargeboten wird und die Anzeigevorrichtung gleichzeitig klein und kompakt ausgebildet ist.

Die Aufgabe wird mit einer Anzeigevorrichtung mit den Merkmalen des Anspruchs 1 gelöst.

Durch die parallele Ausrichtung der Facetten zueinander (die Facetten der Fresnel-Struktur der Vorderseite sind parallel ausgerichtet zu den Facetten der Fresnel-Struktur der Rückseite) wirkt der Lichtkanal optisch als planparallele Platte, so daß die sonst durch die Krümmung der Vorder- und Rückseite bedingten Abbildungsfehler wirkungsvoll verhindert werden können. Die Facetten der beiden Fresnel-Strukturen heben quasi die Wirkung der gekrümmten Vorder- und Rückseite des Brillenglases auf.

Bei der Anzeigevorrichtung kann der Eintrittsabschnitt auf der Vorderseite des Brillenglases eine dritte Fresnel-Struktur mit dritten Facetten aufweisen, die zueinander parallel ausgerichtet sind und gegenüber den ersten und zweiten Facetten gekippt sind. Die Kippung der dritten Facetten ist bevorzugt so gewählt, daß das an den dritten Facetten reflektierte Licht dadurch in den Lichtkanal eingekoppelt wird und in diesem geführt werden kann.

Die dritte Fresnel-Struktur kann so ausgebildet sein, daß sie nur eine Strahlengangfaltung bewirkt und keine abbildende Eigenschaft aufweist. Es ist jedoch auch möglich, daß die dritte Fresnel-Struktur eine Strahlengangfaltung bewirkt und gleichzeitig eine abbildende Eigenschaft aufweist. Die abbildende Eigenschaft kann insbesondere eine Kollimationswirkung sein. Damit kann die Abbildungsoptik insgesamt sehr kompakt ausgebildet sein. Insbesondere kann die Abbildungsoptik durch das Brillenglas allein verwirklicht sein.

Ferner kann bei der erfindungsgemäßen Anzeigevorrichtung der Austrittsabschnitt auf der Vorderseite des Brillenglases eine vierte Fresnel-Struktur mit vierten Facetten aufweisen, die zueinander parallel ausgerichtet sind und gegenüber den ersten und zweiten Facetten gekippt sind. Die vierten Facetten sind insbesondere so gekippt, daß das vom Lichtkanal kommende und an den vierten Facetten reflektierte Licht senkrecht zu den Facetten der ersten und zweiten Fresnel-Struktur verläuft.

Die Fresnel-Struktur auf der Rückseite des Brillenglases kann sich bis zum Eintrittsabschnitt und/oder Austrittsabschnitt erstrecken. Dies ist dahingehend vorteilhaft, daß auch in diesem Bereich die Rückseite für das Licht wie die Seite einer planparallelen Platte wirkt.

Bei der erfindungsgemäßen Anzeigevorrichtung können die vierten Facetten entweder eine zusammenhängende Sägezahnstruktur bilden oder voneinander beabstandet angeordnet sein. Insbesondere können die vierten Facetten mit einer teilreflektierenden Schicht beschichtet sein. Bei der teilreflektierenden Schicht kann es sich z. B. um eine Metallschicht oder eine Interferenzschicht handeln.

Ferner können die vierten Facetten mit einem Material, das den gleichen oder einen ähnlichen Brechungsindex wie das Brillenglas aufweist, so aufgefüllt sein, daß die Vorderseite des Brillenglases in den Auffüllungsbereichen plan ist. Bevorzugt ist die plane Seite der Auffüllung parallel zu den Facetten der Fresnel-Struktur auf der Rückseite des Brillenglases. Es ist jedoch auch möglich, daß die Auffüllung so durchgeführt ist, daß im Bereich der Auffüllung die ursprüngliche Krümmung des Brillenglases wieder hergestellt ist.

Bei der erfindungsgemäßen Anzeigevorrichtung wird das Licht im Lichtkanal bevorzugt durch innere Totalreflexion geführt.

Die Facetten der Fresnel-Strukturen sind bevorzugt plan ausgebildet. Die Stufenhöhe der Facetten liegt bevorzugt im Bereich von 20 µm bis 300 µm.

Das Bilderzeugungsmodul kann einen Bildgeber, bevorzugt einen flächigen Bildgeber, aufweisen, der selbstleuchtend oder nicht selbstleuchtend sein kann. Insbesondere kann der Bildgeber als Kippspiegelmatrix, als LCD-Modul, als LCoS-Modul oder als OLED-Modul ausgebildet sein. Ferner kann das Bilderzeugungsmodul noch eine Steuereinheit zur Steuerung des Bildgebers aufweisen.

Die Abbildungsoptik kann eine Kollimationsoptik aufweisen, die zwischen dem Bilderzeugungsmodul und dem Brillenglas angeordnet ist. Die Kollimationsoptik kann beispielsweise mittels einer einzelnen Linse realisiert sein. Die einzelne Linse kann als Plankonvexlinse ausgebildet sein, wobei bevorzugt die plane Seite dem Bildgeber zugewandt ist. Die konvexe Seite kann sphärisch oder auch asphärisch gekrümmt sein.

Natürlich ist es möglich, daß die Kollimationsoptik mehr als eine einzelne Linse aufweist.

Ferner kann die dritte Fresnel-Struktur so ausgebildet sein, daß ihre abbildende Eigenschaft die Wirkung der Kollimationsoptik ersetzt. In diesem Fall kann auf die separate Kollimationsoptik bzw. die separate Linse verzichtet werden.

Die erfindungsgemäße Anzeigevorrichtung kann ein zweites Brillenglas, das in gleicher Weise wie das erste Brillenglas ausgebildet ist, sowie ein zweites Bilderzeugungsmodul, das wie das erste Bilderzeugungsmodul ausgebildet ist, aufweisen. In diesem Fall ist es möglich, dem Benutzer das erzeugte Bild beispielsweise als dreidimensionales Bild darzubieten.

Ferner kann die erfindungsgemäße Anzeigevorrichtung noch weitere, dem Fachmann bekannte Elemente aufweisen, die zum Betrieb der Anzeigevorrichtung notwendig sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Draufsicht einer ersten Ausführungsform der erfindungsgemäßen Anzeigevorrichtung;
- Fig. 2: eine vergrößerte Darstellung des ersten Brillenglases und des zugehörigen Bilderzeugungsmoduls;
- Fig. 3: eine vergrößerte Darstellung eines Ausschnitts von Fig. 2;
- Fig. 4: eine vergrößerte Darstellung eines Abschnitts von Fig. 2;
- Fig. 5: eine vergrößerte Darstellung der vierten Fresnel-Struktur;
- Fig. 6: eine vergrößerte Darstellung einer alternativen Ausbildung der vierten Fresnel-Struktur, und
- Fig. 7: eine schematische Darstellung des Brillenglases samt zugehöriger Abbildungsoptik einer weiteren Ausführungsform der erfindungsgemäßen Anzeigevorrichtung.

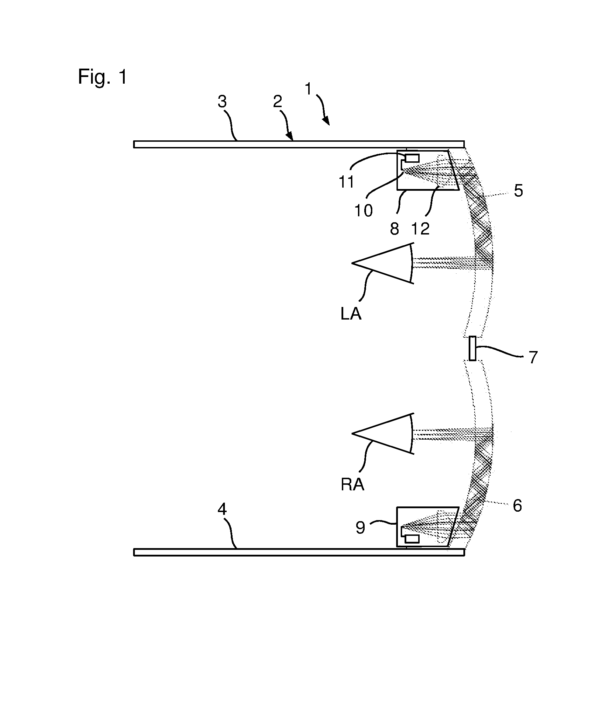

Bei der in Fig. 1 in Draufsicht gezeigten Ausführungsform umfaßt die erfindungsgemäße Anzeigevorrichtung 1 eine auf den Kopf eines Benutzers aufsetzbare Haltevorrichtung 2 mit zwei brillenartigen Seitenbügeln 3, 4, zwei Brillengläser 5, 6 (eines für das linke Auge LA und eines für das rechte Auge RA) sowie eine die beiden Brillengläser 5, 6 verbindende Nasenauflage 7.

Es ist ferner für jedes Auge des Benutzers ein Bilderzeugungsmodul 8, 9 vorgesehen, das am jeweiligen Seitenbügel 3, 4 oder auch am jeweiligen Brillenglas 5, 6 befestigt sein kann. Da die Ausbildung der Brillengläser 5, 6 sowie die Ausbildung der Bilderzeugungsmodule 8, 9 im wesentlichen spiegelsymmetrisch bezüglich einer parallel zu den Seitenbügeln 3 durch die Nasenauflage 7 verlaufenden Achse ist, werden nachfolgend im Detail nur das Brillenglas 5 für das linke Auge LA des Benutzers sowie das zugehörige Bilderzeugungsmodul 8 beschrieben.

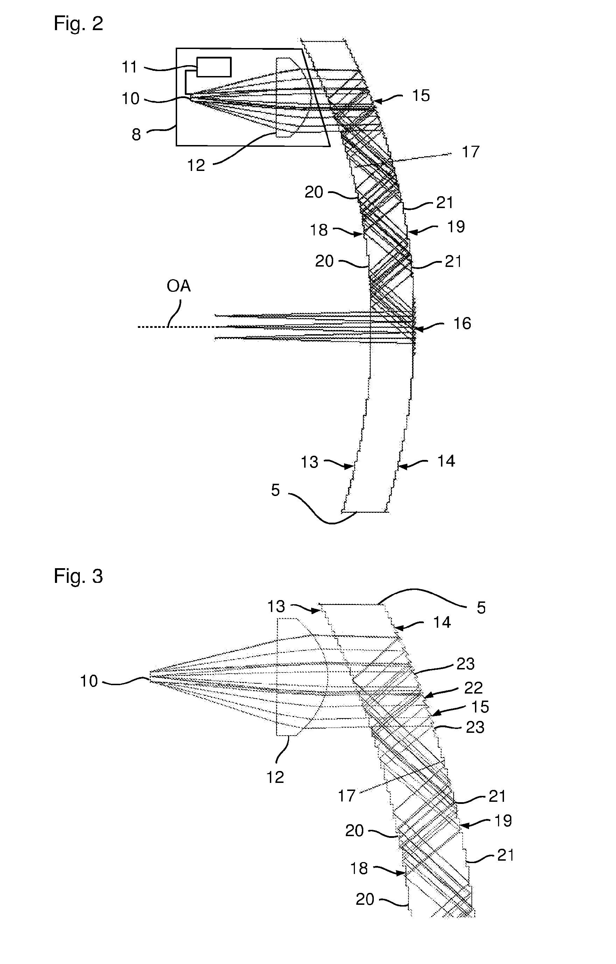

In Fig. 2 ist das linke Brillenglas 5 sowie das Bilderzeugungsmodul 8 in der gleichen Ansicht wie in Fig. 1 vergrößert dargestellt.

Das Bilderzeugungsmodul 8 umfaßt einen flächigen Bildgeber 10 (hier ein OLED- oder ein LCD-Bildgeber) und eine Steuereinheit 11, die den Bildgeber 10 zur Erzeugung eines Bildes ansteuert.

Das Bilderzeugungsmodul 8 enthält ferner eine dem Bildgeber 10 nachgeordnete Kollimationsoptik 12, die hier als Plankonvexlinse ausgebildet ist, wobei die plane Seite dem Bildgeber 10 zugewandt ist und die konvexe Seite asphärisch gekrümmt ist.

Das von der Kollimationsoptik kommende, kollimierte Licht tritt über die gekrümmte Rückseite 13 des linken Brillenglases 5 in dieses ein, läuft bis zur gekrümmten Vorderseite 14 und wird dort in einem ersten Bereich 15 zurück zur Rückseite 13 reflektiert.

Wie dem in Fig. 2 gezeigten Strahlenverlauf zu entnehmen ist, finden mehrere Strahlengangfaltungen an Rückseite 13 und Vorderseite 14 statt und wird das Licht somit bis zu einem zweiten Bereich 16 der Vorderseite 14 geführt. An dem zweiten Bereich 16 wird das Licht so reflektiert, daß es durch die Rückseite 13 hindurch läuft und somit aus dem Brillenglas 5 austritt und auf das Auge LA des Benutzers trifft, so daß dieser das mittels des Bildgebers 10 dargestellte Bild wahrnehmen kann. In Fig. 3 ist das linke Auge LA nicht dargestellt.

Der Bereich im Brillenglas 5, in dem das Licht vom ersten bis zum zweiten Bereich 15 und 16 geführt wird, kann als Lichtkanal 17 bezeichnet werden. Im Bereich des Lichtkanales 17 sind auf der Rückseite 13 eine erste Fresnel-Struktur 18 und auf der Vorderseite 14 des Brillenglases 5 eine zweite Fresnel-Struktur 19 ausgebildet, wobei die Facetten 20, 21 der beiden Fresnel-Strukturen 18, 19 zueinander parallel ausgerichtet sind (in Fig. 2 sind zur besseren Darstellbarkeit nur einige der Facetten 20, 21 mit den jeweiligen Bezugszeichen bezeichnet).

Bei der beschriebenen Ausführungsform stehen die Facetten 20, 21 senkrecht zur optischen Achse OA, so daß aufgrund der Krümmung der Vorder- und Rückseite 13, 14 jeweils eine treppenartige Struktur vorliegt, wie z.B. in Fig. 2 sowie der vergrößerten Ansicht des ersten Bereiches und eines Teils der Fresnel-Strukturen 18, 19 in Fig. 3 ersichtlich ist. Die Größen der Facetten 18, 19 sind bevorzugt so gewählt, daß die Stufenhöhe der treppenartigen Strukturen im Bereich von 20 µm bis 300 µm liegt.

Durch diesen Aufbau wird vorteilhaft erreicht, daß das Brillenglas 5 im Bereich des Lichtkanals 17 optisch einer einfachen Planplatte entspricht. Somit heben die Fresnel-Strukturen 18 und 19 im Bereich des Lichtkanals 17 die Wirkung der gekrümmten Rückseite 13 und der gekrümmten Vorderseite 14 auf. Die Reflexion an den Facetten 20, 21 findet bevorzugt aufgrund innerer Totalreflexion statt.

Wie der Darstellung in Fig. 2 und 3 ferner zu entnehmen ist, erstreckt sich die erste Fresnel-Struktur 18 auch in den Bereich der Rückseite 13, über den das kollimierte Licht der Kollimationsoptik 12 in das Brillenglas 5 eintritt, so daß bei Eintritt über die Rückseite 13 keine unerwünschte abbildende Wirkung für das kollimierte Licht vorliegt, da die Facetten 20 der ersten Fresnel-Struktur 18 senkrecht zur Ausbreitungsrichtung des kollimierten Lichts stehen.

Wie ferner insbesondere Fig. 3 zu entnehmen ist, ist im ersten Bereich 15 auf der Vorderseite 14 eine dritte Fresnel-Struktur 22 ausgebildet, deren Facetten 23 alle um -30° gekippt und zueinander parallel ausgerichtet sind. Die dritte Fresnel-Struktur 22 bewirkt somit die gewünschte Umlenkung in Richtung zur Rückseite 13 hin, so daß dann die Lichtstrahlen zwischen Vorderseite und Rückseite aufgrund der ersten und zweiten Fresnel-Struktur 18 und 19 in gleicher Weise wie bei einer Planplatte hin und her reflektiert werden.

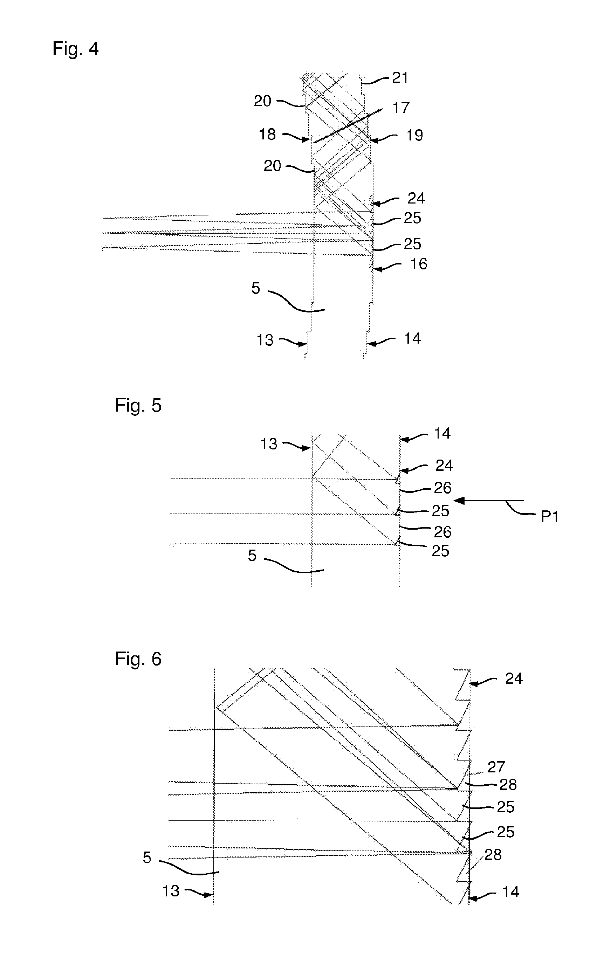

In Fig. 4 ist in vergrößerter Ansicht der zweite Bereich 16 des Brillenglases 5 dargestellt. In dem zweiten Bereich 16 ist eine vierte Fresnel-Struktur 24 mit Facetten 25 ausgebildet, wobei die Facetten 25 hier um +30° gekippt sind, so daß die auf sie treffenden Lichtstrahlen nach Reflexion parallel zur optischen Achse OA und somit senkrecht zu den Facetten 20 der ersten Fresnel-Struktur 18 verlaufen. Dadurch können die Lichtstrahlen aus dem Brillenglas 5 austreten und bis zum linken Auge LA des Benutzers laufen.

Wie der vergrößerten Darstellung in Fig. 5 von drei Facetten 25 der vierten Fresnel-Struktur 24 zu entnehmen sind, können die Facetten 25 voneinander beanstandet sein, wobei die dazwischen liegenden Bereiche 26 entweder als plane Bereiche ausgebildet sind oder die ursprüngliche Krümmung der Vorderseite 14 aufweisen. Somit kann durch die dazwischen liegenden Bereiche 26 Umgebungslicht, wie durch den Pfeil P1 angedeutet ist, über die Vorderseite 14 in das Brillenglas 5 eintreten und aus der Rückseite 13 wieder austreten, wodurch der Benutzer das mittels des Bildgebers 10 erzeugte Bild in Überlagerung mit der Umgebung wahrnehmen kann.

In einer alternativen Ausbildung, die in Fig. 6 gezeigt ist, können die Facetten 25 ohne Abstand aneinander gereiht sein. In diesem Fall sind die Facetten bevorzugt mit einer dünnen Metallschicht 27 beschichtet, so daß sie teilreflektiv bzw. teiltransparent sind. Die Metallschicht 27 kann so ausgebildet sein, daß sie beispielsweise 70% bis 90% des Umgebungslichtes transmittiert und 10% bis 30% des Lichtes aus dem Lichtkanal 17 reflektiert.

Wie Fig. 6 ferner zu entnehmen ist, kann auf der Metallschicht 27 ein Material 28 aufgebracht sein, das den gleichen oder annähernd den gleichen Brechungsindex wie das Brillenglas 5 aufweist. Die Auffüllung mittels des Materials 28 kann insbesondere so sein, daß die Vorderseite 14 plan ist, so daß das Umgebungslicht unbeeinflußt durch das Brillenglas hindurchlaufen kann. Natürlich kann die Vorderseite auch eine Krümmung aufweisen, die der ursprünglichen Krümmung der Vorderseite 14 des Brillenglases entspricht. Die gleiche Auffüllung mit dem Material 28 kann bei den Facetten 25 der Ausführungsform von Fig. 5 durchgeführt werden.

Anstatt der Metallschicht 27 kann auch eine Interferenzschicht verwendet werden.

Mit der beschriebenen Ausbildung der ersten, zweiten und vierten Fresnel-Struktur 18, 19 und 24 wird somit der Vorteil erreicht, daß sowohl für das Umgebungslicht wie auch für das vom Bildgeber 10 eingekoppelte Licht das Brillenglas 5 sich optisch als planparallele Platte darstellt, obwohl die Fresnel-Strukturen 18, 19 und 24 auf der mehr oder weniger stark gekrümmten Vorder- bzw. Rückseite 14, 13 ausgebildet sind. Es wird somit vorteilhafter Weise unabhängig von der Form des Brillenglases kein weiterer Bildfehler bei der Führung der Lichtstrahlen im Lichtkanal 17 generiert, was eine starke Vereinfachung der gesamten Optik ermöglicht.

Des weiteren kann dadurch eine Abbildung mit hoher Qualität selbst bei gekrümmten Brillengläsern 5, 6 erreicht werden.

Ferner kann in vorteilhafter Weise auch erreicht werden, daß so gleichzeitig ein sogenannter Beam Expander realisiert werden kann. Das bedeutet, daß Lichtstrahlen, die auf die senkrechten Facetten 21 an der Vorderseite 14 treffen und reflektiert werden, an den Facetten 20 totalreflektiert werden und ein zweites Mal auf die Vorderseite 14 treffen, wobei sie hier entweder auf eine der geneigten Facetten 25 der vierten Fresnel-Struktur 24 treffen und ausgekoppelt werden oder ein zweites Mal auf eine der senkrechten Facetten 21 treffen und wiederum totalreflektiert werden. Somit muß bei der erfindungsgemäßen Anzeigevorrichtung 1 nicht die üblicher Weise bei Fresnel-Strukturen zu erfüllende Bedingung, daß das Licht nicht zweimal über dieselbe Fresnel-Struktur laufen darf, eingehalten werden, wodurch sehr dünne Brillenglasdicken möglich sind und gleichzeitig ein großes Sichtfeld und eine große Auskoppelpupille realisiert werden können.

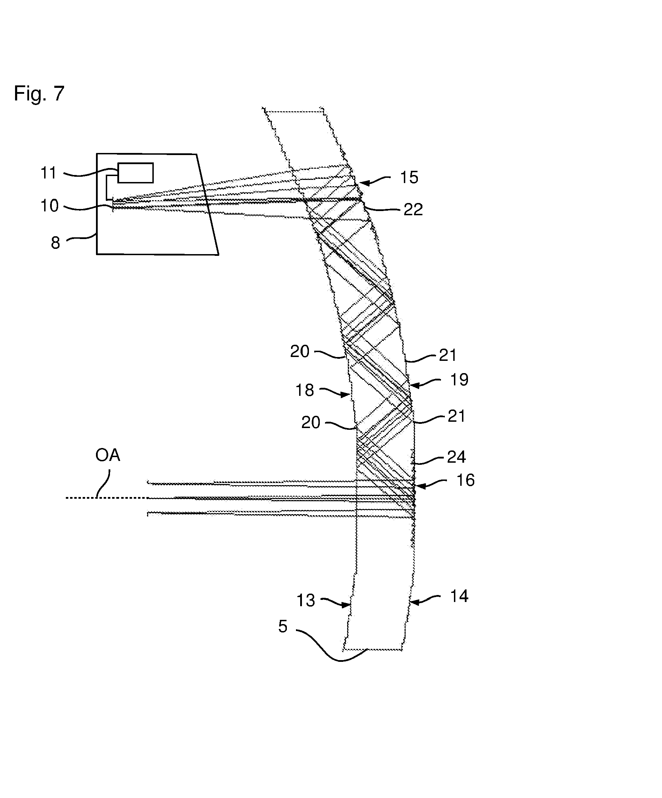

In Fig. 7 ist eine Abwandlung des Brillenglases 5 samt Bilderzeugungsmodul 8 gezeigt. Bei den bisher in Verbindung mit Fig. 1-6 beschriebenen Ausführungsbeispielen sind alle Fresnel-Strukturen 18, 19, 22 und 24 so ausgebildet, daß sie eine Strahlengangfaltung ohne Abbildung bewirken. Sie wirken jeweils quasi wie ein planer Spiegel.

Bei der Abwandlung gemäß Fig. 7 ist im Gegensatz zu den bisher beschriebenen Ausführungsbeispielen die dritten Fresnel-Struktur 22 so ausgebildet, daß sie nicht nur eine Strahlengangfaltung bewirkt, sondern daß sie zusätzlich noch eine abbildende Funktion verwirklicht. Dabei wird dies aber ohne Beugungseffekte realisiert. Die dritte Fresnel-Struktur 22 wirkt quasi wie ein Spiegel mit gekrümmter Spiegelfläche. Die Facetten 23 der dritten Fresnel-Struktur 22 selbst sind wiederum plan ausgebildet.

Wenn die dritte Fresnel-Struktur 22 die beschriebene abbildende Eigenschaft aufweist, kann die separate Kollimationsoptik 12 entfallen, so daß die Anzeigevorrichtung 1 noch kompakter und leichter ausgebildet werden kann.

## Patentansprüche

1. Anzeigevorrichtung mit
einer auf den Kopf eines Benutzers aufsetzbaren Haltevorrichtung (2),
einem an der Haltevorrichtung (2) befestigten Bilderzeugungsmodul (8, 9), das ein Bild erzeugt, und
einer an der Haltevorrichtung (2) befestigten Abbildungsoptik (5, 6), die ein Brillenglas (5) mit einer gekrümmten Vorderseite (14) und einer gekrümmten Rückseite (13) aufweist und die das erzeugte Bild im auf den Kopf aufgesetzten Zustand der Haltevorrichtung (2) so abbildet, daß es der Benutzer in Überlagerung mit der Umgebung wahrnehmen kann,
wobei das vom Bilderzeugungsmodul (8, 9) kommende Licht über einen Eintrittsabschnitt (15) in einen Lichtkanal (17) im Brillenglas (5) eingekoppelt, im Lichtkanal (17) bis zu einem Austrittsabschnitt (16) geführt und über den Austrittsabschnitt (16) aus dem Brillenglas (5) ausgekoppelt wird,
**dadurch gekennzeichnet, daß**
der Lichtkanal (17) im Bereich der Rückseite (13) eine erste Fresnel-Struktur (18) mit einer Mehrzahl von ersten Facetten (20) und im Bereich der Vorderseite (14) eine zweite Fresnel-Struktur (19) mit einer Mehrzahl von zweiten Facetten (21) aufweist, an denen das im Lichtkanal (17) geführte Licht reflektiert wird und die zueinander parallel ausgerichtet sind, wobei aufgrund der ersten und zweiten Facetten (20, 21) der Lichtkanal (17) optisch als planparallele Platte wirkt.

2. Anzeigevorrichtung nach Anspruch 1, **dadurch gekennzeichnet, daß** der Eintrittsabschnitt (15) auf der Vorderseite (14) des Brillenglases (5) eine dritten Fresnel-Struktur (22) mit dritten Facetten (23) aufweist, die zueinander parallel ausgerichtet sind und gegenüber den ersten und zweiten Facetten (20, 21) gekippt sind.

3. Anzeigevorrichtung nach Anspruch 2, **dadurch gekennzeichnet, daß** die dritte Fresnel-Struktur (22) nur eine Strahlengangfaltung bewirkt und keine abbildende Eigenschaft aufweist.

4. Anzeigevorrichtung nach Anspruch 2, **dadurch gekennzeichnet, daß** die dritte Fresnel-Struktur (22) eine Strahlengangfaltung bewirkt und gleichzeitig eine abbildende Eigenschaft aufweist.

5. Anzeigevorrichtung nach einem der obigen Ansprüche, **dadurch gekennzeichnet, daß** der Austrittsabschnitt (16) auf der Vorderseite (14) des Brillenglases (5) eine vierte Fresnel-Struktur (24) mit vierten Facetten (25) aufweist, die zueinander parallel ausgerichtet sind und gegenüber den ersten und zweiten Facetten gekippt sind.

6. Anzeigevorrichtung nach Anspruch 5, **dadurch gekennzeichnet, daß** die vierte Fresnel-Struktur (24) nur eine Strahlengangfaltung bewirkt und keine abbildende Eigenschaft aufweist.

7. Anzeigevorrichtung nach Anspruch 5 oder 6, **dadurch gekennzeichnet, daß** die vierten Facetten (25) eine zusammenhängende Sägezahnstruktur bilden.

8. Anzeigevorrichtung nach Anspruch 5 oder 6, **dadurch gekennzeichnet, daß** die vierten Facetten (25) voneinander beabstandet angeordnet sind.

9. Anzeigevorrichtung nach einem der Ansprüche 5 bis 8, **dadurch gekennzeichnet, daß** die vierten Facetten (25) mit einer teilreflektierenden Schicht (27) beschichtet sind.

10. Anzeigevorrichtung nach einem der obigen Ansprüche, **dadurch gekennzeichnet, daß** das Licht im Lichtkanal (17) durch innere Totalreflexion geführt wird.

11. Anzeigevorrichtung nach einem der obigen Ansprüche, **dadurch gekennzeichnet, daß** das Bilderzeugungsmodul (8, 9) einen Bildgeber (10) und eine dem Bildgeber (10) nachgeordnete Kollimationsoptik (12) aufweist.

## Claims

1. Display device with
a holding device (2) that can be placed on the head of a user,
an image-generating module (8, 9), secured on the holding device (2), which generates an image, and
an imaging lens system (5, 6), secured on the holding device (2), which has a spectacle lens (5) with a curved front (14) and a curved back (13) and which projects the image generated when the holding device (2) is placed on the head such that the user can perceive it superimposed on the surroundings,
wherein the light coming from the image-generating module (8, 9) is coupled via an entrance section (15) into an optical channel (17) in the spectacle lens (5), conducted in the optical channel (17) to an exit section (16) and coupled via the exit section (16) out of the spectacle lens (5),
**characterized in that**
the optical channel (17) has in the region of the back (13) a first Fresnel structure (18) with a plurality of first facets (20) and in the region of the front a second Fresnel structure (19) with a plurality of second facets (21) on which the light conducted in the optical channel (17) is reflected and which are aligned parallel to one another,
wherein owing to the first and second facets (20, 21), the optical channel (17) acts optically as a plane-parallel plate.

2. Display device according to claim 1, **characterized in that** the entrance section (15) has, on the front (14) of the spectacle lens (5), a third Fresnel structure (22) with third facets (23), which are aligned parallel to one another and are tilted relative to the first and second facets (20, 21).

3. Display device according to claim 2, **characterized in that** the third Fresnel structure (22) only brings about a bending of the beam path and does not have an imaging property.

4. Display device according to claim 2, **characterized in that** the third Fresnel structure (22) brings about a bending of the beam path and at the same time has an imaging property.

5. Display device according to one of the preceding claims, **characterized in that** the exit section (16) on the front (14) of the spectacle lens (5) has a fourth Fresnel structure (24) with fourth facets (25), which are aligned parallel to one another and are tilted relative to the first and second facets.

6. Display device according to claim 5, **characterized in that** the fourth Fresnel structure (24) only brings about a bending of the beam path and does not have an imaging property.

7. Display device according to claim 5 or 6, **characterized in that** the fourth facets (25) form a continuous saw-tooth structure.

8. Display device according to claim 5 or 6, **characterized in that** the fourth facets (25) are arranged at a distance from one another.

9. Display device according to one of claims 5 to 8, **characterized in that** the fourth facets (25) are coated with a partially reflecting layer (27).

10. Display device according to one of the preceding claims, **characterized in that** the light is conducted in the optical channel (17) by total internal reflection.

11. Display device according to one of the preceding claims, **characterized in that** the image-generating module (8, 9) has an image transmitter (10) and a collimating lens system (12) arranged after the image transmitter (10).

## Revendications

1. Dispositif d'affichage avec un dispositif de maintien (2) pouvant être posé sur la tête d'un utilisateur, un module de génération d'images (8, 9), fixé au dispositif de maintien (2), qui génère une image et une optique de reproduction (5, 6) fixée sur le dispositif de maintien (2), qui comprend un verre de lunettes (5) avec une face avant (14) incurvée et une face arrière (13) incurvée et qui reproduit l'image générée dans l'état posé sur la tête du dispositif de maintien (2) de façon à ce que l'utilisateur puisse la voir en superposition avec l'environnement, la lumière provenant du module de génération d'image (8, 9) étant introduite par l'intermédiaire d'une portion d'entrée (15) dans un canal de lumière (17) dans le verre de lunettes (5), guidée dans le canal de lumière (17) jusqu'à une portion de sortie (16) et étant sortie du verre de lunettes (5) par l'intermédiaire de la portion de sortie (16), **caractérisé en ce que** le canal de lumière (17) comprend, au niveau de la face arrière (13), une première structure de Fresnel (18) avec une pluralité de premières facettes (20) et, au niveau de la face avant (14), une deuxième structure de Fresnel (19) avec une pluralité de deuxièmes facettes (21), sur lesquelles la lumière guidée dans le canal de lumière (17) est réfléchie et qui sont orientées parallèlement les unes par rapport aux autres, le canal de lumière (17) agissant optiquement comme une plaque parallèle du fait des premières et deuxièmes facettes (20, 21).

2. Dispositif d'affichage selon la revendication 1, **caractérisé en ce que** la portion d'entrée (15) comprend, sur la face avant (14) du verre de lunettes (5), une troisième structure de Fresnel (22) avec des troisièmes facettes (23), qui sont orientées parallèlement entre elles et qui sont basculée par rapport aux première et aux deuxièmes facettes (20, 21).

3. Dispositif d'affichage selon la revendication 2, **caractérisé en ce que** la troisième structure de Fresnel (22) provoque seulement un pliage du trajet optique et ne présente aucune propriété de reproduction.

4. Dispositif d'affichage selon la revendication 2, **caractérisé en ce que** la troisième structure de Fresnel (22) provoque un pliage du trajet optique et présente une propriété de reproduction.

5. Dispositif d'affichage selon l'une des revendications précédentes, **caractérisé en ce que** la portion de sortie (16) comprend, sur la face avant (14) du verre de lunettes (5), une quatrième structure de Fresnel (24) avec des quatrièmes facettes (25) qui sont orientées parallèlement entre elles et qui sont basculées par rapport aux premières et aux deuxièmes facettes.

6. Dispositif d'affichage selon la revendication 5, **caractérisé en ce que** la quatrième structure de Fresnel (24) provoque seulement un pliage du trajet optique et ne présente aucune propriété de reproduction.

7. Dispositif d'affichage selon la revendication 5 ou 6, **caractérisé en ce que** les quatrièmes facettes (25) forment une structure cohérente en dents de scie.

8. Dispositif d'affichage selon la revendication 5 ou 6, **caractérisé en ce que** les quatrièmes facettes (25) sont distantes les unes des autres.

9. Dispositif d'affichage selon l'une des revendications 5 à 8, **caractérisé en ce que** les quatrièmes facettes (25) sont revêtues d'une couche (27) partiellement réfléchissante.

10. Dispositif d'affichage selon l'une des revendications précédentes, **caractérisé en ce que** la lumière est guidée dans le canal de lumière (17) grâce à une réflexion interne totale.

11. Dispositif d'affichage selon l'une des revendications précédentes, **caractérisé en ce que** le module de génération d'image (8, 9) comprend un imageur (10) et une optique de collimation (12) disposée en aval de l'imageur (10).
